# EUROPEAN PATENT SPECIFICATION

(11) **EP 4 234 643 B1**
(45) Date of publication and mention of the grant of the patent: **12.02.2025**
(21) Application number: 23175504.2
(22) Date of filing: 10.11.2017
(51) Int. Cl.: C09D 5/00, C09D 5/16

(54) **ANTIFOULING COMPOSITION**
ANTIFOULING-ZUSAMMENSETZUNG
COMPOSITION ANTISALISSURE

(30) Priority: 11.11.2016 GB 201619149
(43) Date of publication of application: 30.08.2023
(62) Divisional of application: 17797338.5
(73) Proprietor: Jotun A/S, 3202 Sandefjord (NO)
(72) Inventor: DAHLING, Marit, 3218 Sandefjord (NO); AXELSSON, Martin, 41663 Göteborg (SE)
(74) Representative: Dehns

(56) References cited:
- EP-A1- 2 551 309
- EP-A1- 2 781 567
- WO-A1-2009/149919

## Description

### Field of the Invention

The present invention relates to marine antifouling coating compositions, more specifically to marine antifouling coating compositions comprising a silyl ester copolymer comprising triisopropylsilyl methacrylate and at least one hydrophilic (meth)acrylate as comonomers. The composition additionally contains medetomidine as a biocide and rosin or a derivative thereof, and has a calculated VOC content (ASTM D5201-01) below 400 g/L. The invention further relates to a method of protecting objects from fouling, and objects coated with the antifouling composition of the invention.

### Background of invention

Surfaces that are submerged in the marine environment are subject to the attachment of fouling organisms, such as bacteria, diatoms, algae, tube worms, barnacles and mussels. Of all the marine organisms that grow on the surfaces, the barnacles are the most tenacious. Given the right conditions, barnacles can grow extremely quickly. Barnacles are distributed worldwide and are the most commonly encountered fouling organism in coastal waters.

The risk of fouling and the attachment of barnacles on vessels is typically highest during outfitting periods for new buildings and on vessels having a long layup at anchorage or a long static period during trading. Fouling can seriously impair the operational efficiency of a vessel. It is causing increased hydrodynamic drag resulting in increased fuel consumption, decreased speed and decreased operational range. A very rough fouled hull can increase fuel usage by as much as 40 %. There are also additional expenses of dry-docking. Removal of attached calcareous organisms such as barnacles has to be done by mechanical scraping. Fouling on vessels can also cause the spread of non-indigenous species. These are all important economic factors that demand the prevention of biofouling.

To prevent settlement and growth of marine organisms antifouling coatings are used. These coatings generally comprise a film-forming binder and biologically active substances, together with different components such as pigments, fillers and solvents.

The most successful self-polishing antifouling systems on the market today are based on silyl ester copolymers. The binder matrix consists of silyl ester copolymers often together with other binders such as acrylates and rosin or rosin derivatives to adjust the self-polishing properties and the mechanical properties of antifouling coating films. These coating compositions are for example described in, EP 0 646 630, EP 0 802 243, EP 1 342 756, EP 1 641 862, EP 1 695 956, EP 2 781 567, WO 00/77102, WO 03/070832 and WO 2009/007276.

Medetomidine is effective in preventing barnacle settlement on the surface submerged in seawater. It is a nitrogen heterocyclic compound. Such compounds are known to negatively affect the storage stability of antifouling coating compositions and the long-term mechanical properties of antifouling coating films containing hydrolysable binders, and in particular silyl ester copolymers.

The present inventors have now surprisingly established that a silyl ester copolymer incorporating, for example, both triisopropylsilyl methacrylate and a hydrophilic (meth)acrylate comonomer in combination with medetomidine provides a self-polishing antifouling system with improved antifouling performance, in particular in terms of the prevention of barnacle fouling on marine surfaces. Moreover, the antifouling composition of the invention has excellent resistance to cracking and excellent self-polishing properties.

Antifouling coating compositions containing medetomidine has been described. WO2011/118526 claims hydrolysable copolymers, such as silyl ester copolymers, in antifouling coating formulations containing medetomidine. Only one triisopropylsilyl acrylate copolymer without hydrophilic comonomer is exemplified.

WO2007/015676, WO2006/096129, WO00/42851 describes the use of medetomidine (in combination with other biologically active compounds) to prevent barnacle settlement. These documents are not specific on the binder technology.

Antifouling coating compositions containing triisopropylsilyl methacrylate and hydrophilic comonomers are known. WO2010/071180 claims antifouling coating compositions comprising silyl copolymer containing triisopropylsilyl methacrylate and methoxyalkyl methacrylate and copper salt of rosin or copper salt of rosin derivatives. The preferred antifouling agent is cuprous oxide in combination with algaecides. This coating composition performs poorly in terms of fouling prevention against barnacles.

JP2016089167A claims copper free antifouling coating compositions containing silyl copolymer containing triisopropylsilyl methacrylate and methoxyethyl (meth)acrylate and tralopyril giving excellent storage stability and forming antifouling coating film having excellent long-term water resistance (e.g. cracking resistance).

WO2013/073580 claims silyl copolymers comprising structural units from both triisopropylsilyl acrylate and triisopropylsilyl methacrylate in specific ratios giving antifouling coating compositions having long-term storage stability and antifouling coating films having long-term mechanical properties. The comparative examples show the poor mechanical properties of triisopropylsilyl acrylate copolymer and triisopropylsilyl methacrylate copolymer respectively. None of the exemplified silyl copolymers contain any hydrophilic comonomer.

There is a need therefore for silyl ester copolymers (and hence antifouling compositions) that can be combined with medetomidine to give controlled degradation of the antifouling coating, resistance to cracking and excellent antifouling properties, especially excellent anti-barnacle properties. Long term storage stability is also desired.

### Summary of invention

In one aspect, the invention relates to an antifouling coating composition comprising (i) a silyl ester copolymer comprising as comonomers:
(a) triisopropylsilyl methacrylate;
(b) a compound of Formula (I) 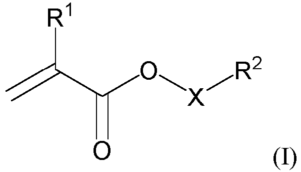 wherein R¹ is hydrogen or methyl, R² is a cyclic ether (such as oxolane, oxane, dioxolane, dioxane optionally alkyl substituted) and X is a C1-C4 alkylene; and/or a compound of Formula (II) 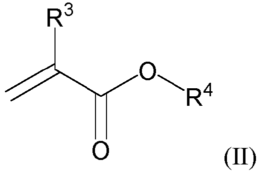 wherein R³ is hydrogen or methyl, and R⁴ is a C3-C18 substituent with at least one oxygen or nitrogen atom, preferably at least one oxygen atom; and optionally
(c) one or more comonomers of Formula (III) 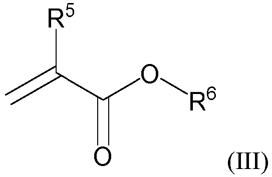 wherein R⁵ is hydrogen or methyl, and R⁶ is a C1-C8 hydrocarbyl;
   (ii) medetomidine; and
   iii) rosin or a derivative thereof;
   wherein the antifouling coating composition has a calculated VOC content (ASTM D5201-01) below 400 g/L..

It is preferred that the silyl ester copolymer has a glass transition temperature (Tg) of at least 20 °C as measured by DSC according to the method of the examples section described herein.

The antifouling coating composition comprises medetomidine and optionally further antifouling agents. The further antifouling agents may be cuprous oxide, copper pyrithione, tralopyril or zinc pyrithione. In one embodiment, as well as the medetomidine, the antifouling coating composition comprises cuprous oxide and copper pyrithione. In an alternative embodiment, as well as the medetomidine, the antifouling coating composition comprises tralopyril and zinc pyrithione. In this regard, the antifouling coating composition can therefore be free of an inorganic copper based antifouling agent.

In another aspect, the invention provides a process for protecting an object from fouling, said process comprising coating at least a part of said object which is subject to fouling with an antifouling coating composition as defined herein.

The invention also relates to objects coated with the antifouling coating composition as defined herein.

Viewed from another aspect the invention relates to the use of the silyl ester copolymer defined herein in an antifouling coating composition comprising medetomidine, i.e. as a binder for such a composition.

### Definitions

The terms "marine antifouling coating composition", "antifouling coating composition" or simply "coating composition" refer to a composition which is suitable for use in marine environments.

The term "hydrocarbyl group" refers to any group containing C atoms and H atoms only and therefore covers alkyl, alkenyl, aryl, cycloalkyl, arylalkyl groups and so on.

The term "(meth)acrylate" means a methacrylate or acrylate.

The term "rosin" used in the text which follows is being used to cover "rosin or derivatives thereof".

The term "binder" defines part of the composition which includes the silyl ester copolymer and any other components which together form a matrix giving substance and strength to the composition. Typically, the term "binder" used herein means the silyl ester copolymer along with any rosin which may be included.

### Detailed description of invention

In one embodiment, the antifouling coating composition of the invention comprises a silyl ester copolymer which includes at least the comonomers triisopropylsilyl methacrylate and a hydrophilic (meth)acrylate. Additional silyl ester (meth)acrylate comonomers, hydrophilic (meth)acrylate comonomers, and/or non-hydrophilic (meth)acrylate comonomers may additionally be present as described herein.

### Silyl ester copolymer

### Comonomers

In one embodiment, the silyl ester copolymer includes at least the comonomers triisopropylsilyl methacrylate (a) and at least one hydrophilic monomer (b).

Where a wt% of a given comonomer in the silyl ester copolymer is given, the wt% is relative to the sum total (weight) of each comonomer present in the copolymer. Thus, if triisopropylsilyl methacrylate (a) and hydrophilic (meth)acrylate monomer (b) are the only comonomers in the silyl ester copolymer, the wt% of triisopropylsilyl methacrylate is calculated as [triisopropylsilyl methacrylate (a) (weight) / (triisopropylsilyl methacrylate (weight) + hydrophilic (meth)acrylate monomer (b) (weight))] x 100%. If only triisopropylsilyl methacrylate (a), hydrophilic (meth)acrylate monomer (b) and methyl methacrylate are present, the wt% of triisopropylsilyl methacrylate is calculated as [triisopropylsilyl methacrylate (a) (weight) / (triisopropylsilyl methacrylate (weight) + hydrophilic (meth)acrylate monomer (b) (weight) + methyl methacrylate (weight))] x 100%.

The copolymer preferably comprises >80 wt%, preferably >90 wt%, more preferably >95 wt%, especially >98 wt% of the combination of triisopropylsilyl methacrylate (a), hydrophilic (meth)acrylate comonomer(s) (b) and non-hydrophilic (meth)acrylate comonomer(s) (c).

Component (a) is triisopropylsilyl methacrylate, which preferably forms 5 to 80 wt% of the copolymer, preferably 25 to 75 wt%, especially 30 to 70 wt%.

Component (b) (total) preferably forms 2 to 50 wt% of the copolymer, preferably 2 to 40 wt% of the copolymer, especially 5 to 40 wt% of the copolymer, more especially 5 to 35 wt%. These wt% values refer to the total of component (b) comonomers present.

The ratio (a):(b) (weight/weight) is preferably in the range of 40:60 to 95:5, preferably in the range of 50:50 to 95:5, especially in the range of 50:50 to 90: 10, most preferably in the range of 50:50 to 85:15. It is preferred that the weight fraction of (a) in the copolymer is greater than that of component (b).

The amount of (a)+(b) in the copolymer is preferably at most 95 wt%, such as at most 90 wt%, especially at most 85 wt%. The amount of (a)+(b) in the copolymer may be in the range of 30-95 wt% or 40-85 wt%.

### Hydrophilic (meth)acrylate comonomer(s) component (b)

In certain embodiments, the silyl ester copolymer contains at least one comonomer of Formula (I) 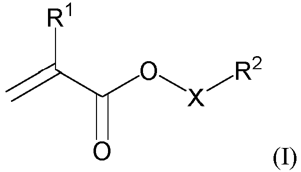 wherein R¹ is hydrogen or methyl, R² is a cyclic ether (such as oxolane, oxane, dioxolane, dioxane optionally alkyl substituted) and X is a C1-C4 alkylene, preferably a C1-C2 alkylene.

The cyclic ether may contain a single oxygen atom in the ring or 2 or 3 oxygen atoms in the ring. The cyclic ether may contain a ring comprising 2 to 8 carbon atoms, such as 3 to 5 carbon atoms. The whole ring might comprise 4 to 8 atoms, such as 5 or 6 atoms.

The cyclic ether ring may be substituted such as by one or more, such as one, C1-C6 alkyl group. That substituent group might be at any position on the ring including the position that binds to the X group.

Suitable compounds of Formula (I) include tetrahydrofurfuryl acrylate, tetrahydrofurfuryl methacrylate, isopropylideneglycerol methacrylate, glycerolformal methacrylate and cyclic trimethylolpropane formal acrylate.

Formula (I) most preferably represents tetrahydrofurfuryl acrylate having the structure below:

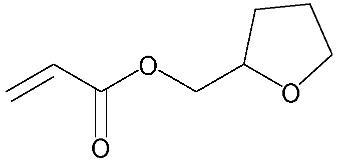

In a further embodiment, the copolymer may include one or more comonomers of Formula (II): 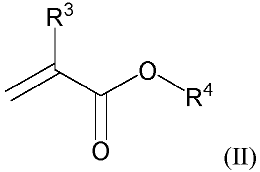 wherein R³ is hydrogen or methyl, and R⁴ is a C3-C18 substituent containing at least one oxygen or nitrogen atom, preferably at least one oxygen atom.

As indicated in the above formula, the term "hydrophilic (meth)acrylate" requires the R⁴ group in Formula (II) to include at least one oxygen or nitrogen atom, preferably at least one oxygen atom. As explained in detail below, additional non-hydrophilic (meth)acrylate comonomers of Formula (III) may also be present, in which the R⁶ unit consists of C and H atoms only.

In an embodiment, the silyl ester copolymer contains at least one comonomer of Formula (II) above in which the R⁴ group is of formula -(CH₂CH₂O)ₘ-R⁷ where R⁷ is a C1-C10 hydrocarbyl substituent, preferably a C1-C10 alkyl or a C6-C10 aryl substituent, and m is an integer in the range of 1 to 6, preferably 1 to 3. Preferably R⁴ is of formula -(CH₂CH₂O)ₘ-R⁷ where R⁷ is an alkyl substituent, preferably methyl or ethyl, and m is an integer in the range of 1 to 3, preferably 1 or 2.

In an embodiment, the silyl ester copolymer includes one or more of 2-methoxyethyl methacrylate, 2-methoxyethyl acrylate, 2-ethoxyethyl methacrylate, 2-(2-ethoxyethoxy)ethyl methacrylate and 2-(2-ethoxyethoxy)ethyl acrylate.

Particularly preferred comonomer(s) (b) include 2-methoxyethyl acrylate, 2-methoxyethyl methacrylate, 2-ethoxyethyl methacrylate, 2-(2-ethoxyethoxy)ethyl acrylate, 2-(2-ethoxyethoxy)ethyl methacrylate, tetrahydrofurfuryl acrylate, and tetrahydrofurfuryl methacrylate.

As used herein, Formula (I) and Formula (II) defines a "polar" (meth)acrylate comonomer or "hydrophilic" (meth)acrylate comonomer. The use of these comonomers with triisopropylsilyl methacrylate ensures the formation of a binder that has a controlled degradation.

It is preferred if the silyl ester copolymer comprises a comonomer of Formula (I) or a comonomer of Formula (II). It is generally not preferred to have a monomer from both these formulae present.

### Additional non-hydrophilic (meth)acrylate comonomer(s) (c)

The silyl ester copolymer may include one or more additional non-hydrophilic (meth)acrylate comonomers of Formula (III) 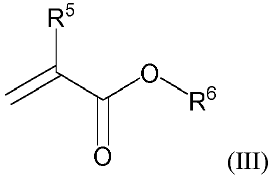 wherein R⁵ is hydrogen or methyl, and R⁶ is a C1-C8 hydrocarbyl substituent, preferably a C1-C8 alkyl substituent, most preferably methyl, ethyl, n-butyl or 2-ethylhexyl. Comonomers according to Formula (III) are referred to as "non-hydrophilic" comonomers herein.

In all embodiments of the invention the silyl ester copolymer preferably includes at least one additional non-hydrophilic methacrylate and/or non-hydrophilic acrylate comonomer. Where one or more non-hydrophilic (meth)acrylate comonomers are present, the sum of these non-hydrophilic (meth)acrylate comonomers in the silyl ester copolymer is preferably at most 60 wt%, preferably no more than 55 wt%, such as in the range of 10 to 55 wt%, especially in the range of 10 to 50 wt%.

In a preferred embodiment, the comonomers triisopropylsilyl methacrylate (a), component (b) and any non-hydrophilic (meth)acrylate comonomer(s) according to Formula (III) together form >80wt%, preferably >90 wt%, especially >95 wt% of the comonomers in the silyl ester copolymer.

In a preferred embodiment, the silyl ester copolymer includes one or more of the non-hydrophilic comonomers methyl methacrylate and/or n-butyl acrylate.

In all embodiments of the invention it is preferred that methyl methacrylate is included. Where present, methyl methacrylate is preferably present in an amount of 2 to 60 wt%, preferably 5 to 50 wt% of the copolymer. In a preferred embodiment triisopropylsilyl methacrylate (a), component (b) and methyl methacrylate together form >50 wt%, preferably >55 wt%, especially >60 wt% of the comonomers in the silyl ester copolymer.

Where present, n-butyl acrylate is preferably present in an amount of 1 to 30 wt%, especially 2 to 25 wt%.

### Additional silyl (meth)acrylate comonomers

The silyl ester copolymer may include additional silyl (meth)acrylate comonomers. Where present, any additional silyl (meth)acrylate comonomer other than triisopropylsilyl methacrylate preferably forms no more than 20 wt% of the copolymer, preferably no more than 10 wt% of the copolymer. Where present, suitable silyl (meth)acrylate comonomers are preferably of Formula (IV) 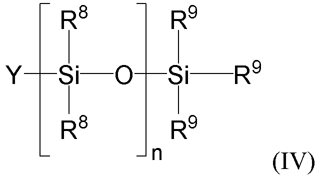 wherein
R⁸ are each independently selected from linear or branched C1-C4 alkyl groups;
R⁹ are each independently selected from the group consisting of linear or branched C1-C20 alkyl groups, C3-C12 cycloalkyl groups, optionally substituted C6-C20 aryl groups and -OSi(R¹⁰)₃ groups;
each R¹⁰ is independently a linear or branched C1-C4 alkyl groups,
n is an integer from 0 to 5;
Y is an ethylenically unsaturated group, such as acryloyloxy group, methacryloyloxy group, (methacryloyloxy)alkylenecarbonyloxy group and (acryloyloxy)alkylenecarbonyloxy group. It will be appreciated that triisopropylsilyl methacrylate should be regarded as excluded from Formula (IV) as it is always present in the silyl ester copolymer of the invention.

The term "alkyl" is intended to cover both linear or branched alkyl groups such as methyl, ethyl, isopropyl, propyl and butyl. Particularly preferred cycloalkyl groups include cyclohexyl and substituted cyclohexyl.

Examples of the substituted aryl groups include aryl groups substituted with at least one substituent selected from halogens, alkyl groups having 1 to about 8 carbon atoms, acyl groups, or a nitro group. Particularly preferred aryl groups include substituted and unsubstituted phenyl, benzyl, phenalkyl or naphthyl.

Ideally, preferred silyl ester monomers are based on compounds of Formula (IV) in which n is 0, i.e. those of formula Y-Si(R⁹)₃.

Examples of monomers containing silyl ester functionality are well known. Monomers as defined by the general Formula (IV) include:
silyl ester monomers of acrylic acid and methacrylic acid, such as triisopropylsilyl acrylate, triethylsilyl (meth)acrylate, tri-n-propylsilyl (meth)acrylate, tri-n-butylsilyl (meth)acrylate, triisobutylsilyl (meth)acrylate, tri-tert-butylsilyl (meth)acrylate, tri-sec-butylsilyl (meth)acrylate, tri-n-pentylsilyl (meth)acrylate, triisopentylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-(p-methylphenyl)silyl (meth)acrylate, tribenzylsilyl (meth)acrylate, ethyldimethylsilyl (meth)acrylate, n-propyldimethylsilyl (meth)acrylate, isopropyldimethylsilyl (meth)acrylate, n-butyldimethylsilyl (meth)acrylate, isobutyldimethylsilyl (meth)acrylate, tert-butyldimethylsilyl (meth)acrylate, n-pentyldimethylsilyl (meth)acrylate, n-hexyldimethylsilyl (meth)acrylate, neohexyldimethylsilyl (meth)acrylate, thexyldimethylsilyl (meth)acrylate, n-octyldimethylsilyl (meth)acrylate, n-decyldimethylsilyl (meth)acrylate, dodecyldimethylsilyl (meth)acrylate, n-octadecyldimethylsilyl (meth)acrylate, cyclohexyldimethylsilyl (meth)acrylate, phenyldimethylsilyl (meth)acrylate, benzyldimethylsilyl (meth)acrylate, phenethyldimethylsilyl (meth)acrylate, (3-phenylpropyl)dimethylsilyl (meth)acrylate, p-tolyldimethylsilyl (meth)acrylate, isopropyldiethylsilyl (meth)acrylate, n-butyldiisopropylsilyl (meth)acrylate, n-octyldiisopropylsilyl (meth)acrylate, methyldi-n-butylsilyl (meth)acrylate, methyldicyclohexylsilyl (meth)acrylate, methyldiphenylsilyl (meth)acrylate, tert-butyldiphenylsilyl (meth)acrylate, nonamethyltetrasiloxy (meth)acrylate, bis(trimethylsiloxy)methylsilyl (meth)acrylate, tris(trimethylsiloxy)silyl (meth)acrylate and others as described in WO2014/064048 and WO03/080747.

The silyl ester copolymer may comprise both triisopropylsilyl acrylate and triisopropylsilyl methacrylate.

### Properties of the silyl ester copolymer

The polymer containing organosilyl ester groups can be obtained by polymerizing a monomer mixture in the presence of a polymerization initiator by any of various methods such as solution polymerization, bulk polymerization, emulsion polymerization, and suspension polymerization in a conventional way or by controlled polymerization techniques. In preparing a coating composition using this polymer containing organosilyl ester groups, the polymer is preferably diluted with an organic solvent to give a polymer solution having an appropriate viscosity. From this standpoint, it is desirable to employ solution polymerization.

Examples of the polymerization initiators include azo compounds such as dimethyl 2,2'-azobis(2-methylpropionate), 2,2'-azobis(2-methylbutyronitrile), 2,2'-azobis(isobutyronitrile) and 1,1'-azobis(cyanocyclohexane); and peroxides such as *tert*-amyl peroxypivalate, *tert*-butyl peroxypivalate *tert*-amyl peroxy-2-ethylhexanoate, *tert*-butyl peroxy-2-ethylhexanoate, 1,1,3,3-tetramethylbutyl peroxy-2-ethylhexanoate, *tert*-butyl peroxydiethylacetate, *tert*-butyl peroxyisobutyrate, *tert*-butyl peroxybenozate, 1,1-di(*tert*-amyl peroxy)cyclohexane, *tert*-amylperoxy 2-ethylhexyl carbonate, *tert*-butylperoxy isopropyl carbonate, *tert-*butylperoxy 2-ethylhexyl carbonate, polyether poly-*tert*-butylperoxy carbonate, di-*tert*-butyl peroxide and dibenzoyl peroxide. These compounds are used alone or as a mixture of two or more thereof.

Examples of the organic solvent include aromatic hydrocarbons such as xylene, toluene, mesitylene; ketones such as methyl ethyl ketone, methyl isobutyl ketone, methyl amyl ketone, methyl isoamyl ketone, cyclopentanone, cyclohexanone; esters such as butyl acetate, *tert*-butyl acetate, amyl acetate, ethylene glycol methyl ether acetate; ethers such as ethylene glycol dimethyl ether, diethylene glycol dimethyl ether, dibutyl ether, dioxane, tetrahydrofuran, alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents. These compounds are used alone or as a mixture of two or more thereof. The copolymer is preferably a random copolymer.

The thus-obtained polymer containing organosilyl ester groups preferably has a weight-average molecular weight from 5,000 to 100,000, preferably from 10,000 to 80,000, more preferably from 20,000 to 60,000. Mw is measured as described in the examples section.

The copolymer preferably has a glass transition temperature (Tg) of at least 15 °C, preferably at least 20 °C, such as at least 22 °C, all values being measured according to the Tg test described in the examples section. Values less than 80 °C are preferred, such as less than 75 °C, e.g. less than 60 °C.

The silyl ester copolymer may be provided as a polymer solution. The polymer solution is desirably regulated to have a solid content of from 30 to 90 % by weight, preferably from 40 to 85 % by weight, more preferably from 40 to 75 % by weight.

The final antifouling coating composition of the invention preferably comprises 0.5 to 45 wt% of the silyl ester copolymer, such as 1 to 30 wt%, in particular 5 to 25 wt% based on the total coating composition.

An antifouling coating composition of the invention may optionally comprise a mixture of the silyl ester copolymer of the invention and other silyl ester copolymers, for example as described in US 4,593,055, EP 0 646 630, WO 2009/007276 and EP 2 781 567.

### Rosin component

Rosin is used to adjust the self-polishing properties and the mechanical properties of the antifouling coating film. Antifouling coating compositions of the invention preferably comprise at least 0.5 wt% rosin, such as at least 1 wt%. The upper limit for rosin components may be 25 wt%, such as 15 wt%.

The rosin of use in the invention can be a rosin or derivative thereof such as a salt thereof e.g. as described below. Examples of rosin materials include wood rosin, tall oil rosin and gum rosin; rosin derivatives such as hydrogenated and partially hydrogenated rosin, disproportionated rosin, dimerised rosin, polymerised rosin, maleic acid esters, fumaric acid esters, glycerol esters, methyl esters, pentaerythritol esters and other esters of rosin and hydrogenated rosin, copper resinate, zinc resinate, calcium resinate, magnesium resinate and other metal resinates of rosin and polymerised rosin and others as described in WO 97/44401. Preferred are gum rosin and derivatives of gum rosin.

In the present invention, the antifouling composition preferably comprises 0.5 to 25 wt%, preferably 1 to 20 wt% of a rosin material, preferably 2 to 15 wt%.

The properties of the antifouling coating can be tuned by varying the relative amounts of silyl ester copolymer and rosin components.

### Other Binder components

In addition to the silyl ester copolymer and optionally the rosin, an additional binder can be used to adjust the properties of the antifouling coating film. Examples of binders that can be used in addition to the silyl ester copolymers and rosins of the invention include:
(meth)acrylic polymers and copolymers, in particular acrylate binders, such as poly(*n*-butyl acrylate), poly(*n*-butyl acrylate-*co*-isobutyl vinyl ether) and others as described in WO03/070832 and EP2128208;
vinyl ether polymers and copolymers, such as poly(methyl vinyl ether), poly(ethyl vinyl ether), poly(isobutyl vinyl ether), poly(vinyl chloride-*co*-isobutyl vinyl ether);
acid functional polymers of which the acid group is blocked with divalent metals bonded to a monovalent organic residue, for example as described in EP 0 204 456 and EP 0 342 276; or divalent metals bonded to a hydroxyl residue, for example as described in GB 2 311 070 and EP 0 982 324; or amine for example as described in EP 0 529 693;
hydrophilic copolymers for example (meth)acrylate copolymers as described in GB 2 152 947 and poly(*N*-vinyl pyrrolidone) copolymers and other copolymers as described in EP 0 526 441; aliphatic polyesters, such as poly(lactic acid), poly(glycolic acid), poly(2-hydroxybutyric acid), poly(3-hydroxybutyric acid), poly(4-hydroxyvaleric acid), polycaprolactone and aliphatic polyester copolymer containing two or more of the units selected from the above-mentioned units;
metal containing polyesters for example as described in EP 1 033 392 and EP 1 072 625;
polyoxalates as described in WO2009/100908 and other condensation polymers as described in WO 96/14362;
alkyd resins and modified alkyd resins;
hydrocarbon resin, e.g. as described in WO2011/092143, such as hydrocarbon resin formed only from the polymerisation of at least one monomer selected from a C5 aliphatic monomer, a C9 aromatic monomer, an indene coumarone monomer, or a terpene or mixtures thereof.

If, in addition to the rosin and silyl ester copolymer, a further binder is present, the weight ratio of silyl copolymer(s):binder may range from 30:70 to 95:5, preferably from 35:65 to 90:10, especially 40:60 to 80:20. These preferred ratios relate to the amount of silyl copolymer(s) and additional binder only, i.e. the rosin is not included.

Especially suitable additional binders are (meth)acrylic polymers and copolymers.

### Biocide

The antifouling coating additionally comprises a compound capable of preventing or removing marine fouling on or from a surface. In this regard, 4-[1-(2,3-dimethylphenyl)ethyl]-1H-imidazole [medetomidine] must be present.

In addition to this biocide, other antifouling compounds can be present. The terms antifouling agent, anti-foulant, biocide, toxicant are used in the industry to describe known compounds that act to prevent marine fouling on a surface. The antifouling agents of the invention are marine antifouling agents.

The coating composition may include a copper biocide, preferably cuprous oxide (Cu₂O) and/or copper pyrithione. The cuprous oxide material has a typical particle diameter distribution of 0.1-70 µm and an average particle size (d50) of 1-25 µm. The cuprous oxide material may content a stabilizing agent to prevent surface oxidation and agglomeration. Examples of commercial available cuprous oxide include Nordox Cuprous Oxide Red Paint Grade, Nordox XLT from Nordox AS, Cuprous oxide from Furukawa Chemicals Co., Ltd.; Red Copp 97N, Purple Copp, Lolo Tint 97N, Chemet CDC, Chemet LD from American Chemet Corporation; Cuprous Oxide Red from Spiess-Urania; Cuprous oxide Roast, Cuprous oxide Electrolytic fromTaixing Smelting Plant Co., Ltd.

The coating compositions of the invention may contain other biocides such as described in WO2014/064048. Preferred additional biologically active agents are cuprous oxide, copper thiocyanate, zinc pyrithione, copper pyrithione, zinc ethylenebis(dithiocarbamate) [zineb], 2-(tert-butylamino)-4- (cyclopropylamino)-6-(methylthio)-1,3,5-triazine [cubutryne], 4,5-dichloro-2-n-octyl-4-isothiazolin-3-one [DCOIT], N-dichlorofluoromethylthio-N',N'-dimethyl-N-phenylsulfamide [dichlorofluanid], N-dichlorofluoromethylthio-N',N'-dimethyl-N-p-tolylsulfamide [tolylfluanid], triphenylborane pyridine [TPBP] and 4-bromo-2-(4-chlorophenyl)-5-(trifluoromethyl)-1H-pyrrole-3-carbonitrile [tralopyril].

A mixture of biocides can be used as is known in the art as different biocides operate against different marine fouling organisms.

More preferred is a mixture of biocides active against marine invertebrates, such as barnacles, tubeworms, bryozoans and hydroids; plants, such as seaweed, algae and diatoms; and bacteria.

In one embodiment, the composition is free of an inorganic copper biocide. In this regard, the most preferred option is a combination of medetomidine, tralopyril and one or more selected biocides selected from zinc pyrithione, zineb and 4,5-dichloro-2-octyl-4-isothiazolin-3-one.

In an alternative embodiment, as well as the medetomidine, the antifouling coating composition comprises cuprous oxide and/or copper thiocyanate and one or more biocides selected from copper pyrithione, zineb and 4,5-dichloro-2-octyl-4-isothiazolin-3-one.

In an alternative embodiment, the antifouling coating is copper free.

The combined amounts of biocides may form up to 70 wt% of the coating composition, such as 0.1 to 60 wt%, e.g. 0.2 to 60 wt%. Where inorganic copper compounds are present, a suitable amount of biocide might be 20 to 60 wt% in the coating composition. Where inorganic copper compounds are avoided, lower amounts might be used such as 0.1 to 20 wt%, e.g. 0.2 to 15 wt%. It will be appreciated that the amount of biocide will vary depending on the end use and the biocide used.

The amount of medetomidine used is low. Typical amounts in the composition are 0.02 to 1.0 wt%, such as 0.05-0.5 wt%, especially 0.1-0.4 wt%.

Some biocides may be encapsulated or adsorbed on an inert carrier or bonded to other materials for controlled release. These percentages refer to the amount of active biocide present and not therefore to any carrier used.

### Other components

In addition to the silyl ester copolymer and any of the optional components described above, the antifouling coating composition according to the present invention may optionally further comprise one or more components selected among other binders, inorganic or organic pigments, extenders and fillers, additives, solvents and thinners.

Examples of pigments are inorganic pigments such as titanium dioxide, iron oxides, zinc oxide, zinc phosphate and graphite; organic pigments such as phthalocyanine compounds, azo pigments and carbon black.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium silicate and silica; polymeric and inorganic microspheres such as uncoated or coated hollow and solid glass beads, uncoated or coated hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, anti-settling agents, wetting and dispersing agents, plasticizers and solvents.

Examples of reinforcing agents are flakes and fibres. Fibres include natural and synthetic inorganic fibres such as silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide, polyester fibres, polyhydrazide fibres, polyvinylchloride fibres, polyethylene fibres and others as described in WO 00/77102. Preferably, the fibres have an average length of 25 to 2,000 µm and an average thickness of 1 to 50 µm with a ratio between the average length and the average thickness of at least 5.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates and mixtures thereof.

Examples of plasticizers are polymeric plasticizers, chlorinated paraffins, phthalates, phosphate esters, sulphonamides, adipates, epoxidised vegetable oils and sucrose acetate isobutyrate.

Examples of dehydrating agents and drying agents include anhydrous calcium sulphate, calcium sulphate hemihydrate, anhydrous magnesium sulphate, anhydrous sodium sulphate, anhydrous zinc sulphate, molecular sieves and zeolites; orthoesters such as trimethyl orthoformate, triethyl orthoformate, tripropyl orthoformate, triisopropyl orthoformate, tributyl orthoformate, trimethyl orthoacetate and triethyl orthoacetate; ketals; acetals; enolethers; orthoborates such as trimethyl borate, triethyl borate, tripropyl borate, triisopropyl borate, tributyl borate and tri-tert-butyl borate; silanes such as tetraethoxysilane, trimethoxymethylsilane, triethoxymethylsilane, phenyltrimetoxysilane, vinyltrimethoxysilane, vinyltriethoxysilane and ethyl polysilicate; and isocyanates, such as p-toluenesulfonyl isocyanate.

The preferred dehydrating agents and drying agents are silanes, such as tetraethoxysilane, and inorganic compounds. The use of a silane and a rosin or derivative thereof is especially preferred.

Examples of stabilizers that contribute to the storage stability of the antifouling coating composition are carbodiimide compounds, such as bis(2,6-diisopropylphenyl)carbodiimide and 1,3-di-*p*-tolylcarbodiimide and others as described in EP 2 725 073.

In general, any of these optional components can be present in an amount ranging from 0.1 to 20 wt%, typically 0.5 to 20 wt%, preferably 0.75 to 15 wt% of the antifouling composition. It will be appreciated that the amount of these optional components will vary depending on the end use.

It is highly preferred if the antifouling composition contains a solvent. This solvent is preferably volatile and is preferably organic. Examples of organic solvents and thinners are aromatic hydrocarbons such as xylene, toluene, mesitylene; ketones such as methyl ethyl ketone, methyl isobutyl ketone, methyl isoamyl ketone, methyl amyl ketone, diisobutyl ketone, methyl propyl ketone, cyclopentanone, cyclohexanone; esters such as butyl acetate, *tert*-butyl acetate, amyl acetate, isoamyl acetate, ethylene glycol methyl ether acetate, propyl propionate, butyl propionate; ethers such as ethylene glycol dimethyl ether, diethylene glycol dimethyl ether, dibutyl ether, dioxane, tetrahydrofuran; alcohols such as *n*-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

Preferred solvents are aromatic solvents, especially xylene and mixtures of aromatic hydrocarbons.

The amount of solvent is preferably as low as possible. The solvent content may be up to 50 wt% of the composition, preferably up to 45 wt% of the composition, such as up to 40 wt% but may be as low as 15 wt% or less, e.g. 10 wt% or less. Again, the skilled man will appreciate that the solvent content will vary depending on the other components present and the end use of the coating composition.

Alternatively, the coating can be dispersed in an organic non-solvent for the film-forming components in the coating composition or in an aqueous dispersion.

The antifouling coating composition of the invention should preferably have solids content above 40 vol%, e.g. above 45 vol%, such as above 50 vol%, preferably above 55 vol%.

The antifouling coating composition of the invention will have a content of volatile organic compounds (VOC) below 400 g/L, e.g. below 390 g/L. VOC content is calculated according to ASTM D5201-01.

The antifouling coating composition of the invention can be applied to a whole or part of any object surface which is subject to fouling. The surface may be permanently or intermittently underwater (e.g. through tide movement, different cargo loading or swell). The object surface will typically be the hull of a vessel or surface of a fixed marine object such as an oil platform or buoy. Application of the coating composition can be accomplished by any convenient means, e.g. via painting (e.g. with brush or roller) or spraying the coating onto the object. Typically, the surface will need to be separated from the seawater to allow coating. The application of the coating can be achieved as conventionally known in the art.

When applying the antifouling coating to an object (e.g a ship hull) the surface of the object is not protected solely by a single coat of antifouling. Depending on the nature of the surface the antifouling coating can be applied directly to an existing coating system, comprising several layers of paint of different generic types (e.g. epoxy, polyester, vinyl or acrylic or mixtures thereof). Starting with an uncoated surface (e.g. steel, aluminium, plastic, composite, glass fiber or carbon fiber) the full coating system will typically comprise one or two layers of an anticorrosive coating, one layer of tie-coat and one or two layers of antifouling paint. In exceptional cases further layers of antifouling paint may be applied. If the surface is a clean and intact antifouling coating from a previous application, the new antifouling paint can be applied directly, typically as one or two coats with more in exceptional cases.

The invention will now be defined with reference to the following nonlimiting examples.

### Examples

### Materials and methods

### Testing

### Determination of polymer solution viscosity

The viscosity of the polymers are determined in accordance with ASTM D2196 using a Brookfield DV-I viscometer with LV-2 or LV-4 spindle at 12 rpm. The polymers are tempered to 23.0 °C ± 0.5 °C before the measurements.

### Determination of solids content of the polymer solutions

The solids content in the polymer solutions are determined in accordance with ISO 3251. A test sample of 0.5 g ± 0.1 g are taken out and dried in a ventilated oven at 150 °C for 30 minutes. The weight of the residual material is considered to be the non-volatile matter (NVM). The non-volatile matter content is expressed in weight percent. The value given is the average of three parallels.

### Determination of polymer average molecular weights distribution

The polymers are characterised by Gel Permeation Chromatography (GPC) measurement. The molecular weight distribution (MWD) was determined using a Polymer Laboratories PL-GPC 50 instrument with two PLgel 5 µm Mixed-D columns from Polymer Laboratories in series, tetrahydrofuran (THF) as eluent at ambient temperature and at a constant flow rate of 1 mL/min and with a refractive index (RI) detector. The columns were calibrated using polystyrene standards Easivials PS-H from Polymer Laboratories. The data were processed using Cirrus software from Polymer Labs. Samples were prepared by dissolving an amount of polymer solution corresponding to 25 mg dry polymer in 5 mL THF. The samples were kept for minimum 3 hours at room temperature prior to sampling for the GPC measurements. The weight-average molecular weight (Mw), the number-average molecular weight (Mn) and the polydispersity index (PDI), given as Mw/Mn, are reported in the tables.

### Determination of the glass transition temperature

The glass transition temperature (Tg) is obtained by Differential Scanning Calorimetry (DSC) measurements. The DSC measurements were performed on a TA Instruments DSC Q200. Samples were prepared by transfer of a small amount of polymer solution to an aluminium pan and dry the samples for minimum 10 h at 50 °C with subsequent 3 h at 150 °C. The samples of approx. 10 mg dry polymer material were measured in open aluminium pans and scans were recorded at a heating rate of 10 °C/min and cooling rate of 10 °C/min, within a temperature range from -50 °C to 150 °C, with an empty pan as reference. The data were processed using Universal Analysis software from TA Instruments. The inflection point of the glass transition range, as defined in ASTM E1356-08, of the second heating is reported as the Tg of the polymers.

### General procedure for preparation of antifouling coating compositions

The components were mixed in the proportions given in Table 2. The mixture was dispersed in the presence of glass beads (approx. 2mm in diameter) in a paint can of 250 ml using a vibrational shaker for 15 minutes. The glass beads were filtered of before testing.

### Determination of paint viscosity using Cone and Plate viscometer

The viscosity of the antifouling coating compositions were determined according to ISO 2884-1:1999 using a digital Cone and Plate viscometer set at a temperature of 23 °C, working at a shear rate of 10000 s⁻¹ and providing viscosity measurement in the range of 0-10 P. The result is given as the average of three measurements.

### Calculation of the volatile organic compound (VOC) content of the antifouling coating composition

The volatile organic compound (VOC) content of the antifouling coating composition is calculated in accordance with ASTM D5201.

### Accelerated cracking testing of coating films

PVC panels are coated with an appropriate anticorrosive primer. The antifouling coatings were applied on the panels using a film applicator with gap size of 800µm. The panels were dried for 72 h at 52 °C before immersion in seawater at 40 °C. At regular intervals, the panels are taken out and evaluated. The panels are evaluated for cracking visually and under 10 x magnifications upon drying at RT for 24 h and again after drying at 52 °C for 24h. The panels were then re-immersed. The rating after drying at 52 °C are reported in Table 3.

The panels were rated as follows:
0 - No cracks
1 - Very few cracks
2 - Moderate number of cracks
3 - Considerable number of cracks
4 - Dense cracking

### Determination of the polishing rates of antifouling coating films on rotating disc in seawater

The polishing rate is determined by measuring the reduction in film thickness of a coating film over time. For this test PVC discs are used. The coating compositions are applied as radial stripes on the disc using a film applicator with a gap size of 300 µm. The thickness of the dry coating films are measured by a surface profiler. Typical initial dry film will depend on the solids content of the applied antifouling coating composition and the speed of application. Typical initial film thickness for the tested coatings in the example part is 100 ± 10 µm. The PVC discs are mounted on a shaft and rotated in a container in which seawater is flowing through. The speed of the rotated shaft gives an average simulated speed of 16 knots on the disc. Natural seawater which has been filtered and temperature-adjusted to 25 °C ± 2 °C is used. The PVC discs are taken out at regular intervals for measuring the film thickness. The discs are rinsed and allowed to dry overnight at room temperature before measuring the film thickness. The results are given as film reduction, i.e. the difference between the initial film thickness and the measured thickness at the given time. The coating film is considered to be polished through when a thin, non-polishing leached layer is remaining on the surface, typically 10-20 µm in thickness, or when the film is totally polished away from the surface. This is denoted as PT in the result tables.

### Determination of barnacle resistance by static immersion testing in sea water

PVC panels were prepared by applying one coat of a vinyl epoxy tie-coat (Safeguard Plus, manufactured by Jotun) and one coat of an antifouling coating (SeaQuantum Ultra S, manufactured by Jotun). The antifouling coating compositions of the invention was applied by using a film applicator with a gap size of 400 µm, giving a total test area of approx. 120 cm². The dry test panels were immersed in the sea in subtropical waters outside Florida, USA and inspected at regular intervals.

The barnacle resistance was rated as follows:
0: None
1: <5 % coverage of barnacle fouling
2: 5-10 % coverage of barnacle fouling
3: 10-15% coverage of barnacle fouling
4: > 15% coverage of barnacle fouling

The rating scale is only valid for test areas of 100-150 cm². Edge effects on the panel are excluded, as described in ASTM D6990-05, section 7.5, when rating the coating film.

### Procedure for preparation of copolymer solution S1 and S9

53 parts by weight of xylene is charged to a temperature-controlled reaction vessel equipped with a stirrer, a condenser, a nitrogen inlet and a feed inlet. The reaction vessel is heated and maintained at the reaction temperature of 85 °C. A pre-mix of triisopropylsilyl methacrylate, 2-methoxyethyl methacrylate, n-butyl acrylate and methyl methacrylate in the proportions given in Table 1 and 1.0 parts 2,2'-azobis(2-methylbutyronitrile) is prepared. The pre-mix is charged to the reaction vessel at a constant rate over 2 hours under a nitrogen atmosphere. Then 0.5 parts of tert-butyl peroxy-2-ethylhexanoate is added. The reaction vessel is maintained at the reaction temperature for a further 2 hours. The reactor is then heated to 110 °C and kept at this temperature for 1 hour. 30 parts of xylene is added for thinning and the reactor is cooled to room temperature.

### General procedure for preparation of copolymer solution S2-S8 and comparative copolymer solution CS3-CS4

A quantity of solvent is charged to a temperature-controlled reaction vessel equipped with a stirrer, a condenser, a nitrogen inlet and a feed inlet. The reaction vessel is heated and maintained at the reaction temperature given in Table 1. A pre-mix of monomers, initiator, solvents and optional chain transfer agent is prepared. The pre-mix is charged to the reaction vessel at a constant rate over 2 hours under a nitrogen atmosphere. After further 30 minutes, post-addition of a boost initiator solution is added. The reaction vessel is maintained at the reaction temperature for a further 2 hours. The reactor is then heated to 110 °C and kept at this temperature for 1 hour. Additional solvent is added for thinning and the reactor is cooled to room temperature.

### Procedure for preparation of comparative copolymer solution CS1

Production example 4 of EP 2 551 309 for production of silyl ester copolymer (a3-1) was repeated to prepare comparative copolymer solution CS1.

Into a temperature-controlled reaction vessel equipped with a stirrer, a condenser, a nitrogen inlet and a feed inlet, 100 parts by weight of xylene was introduced, and heating and stirring were carried out in a stream of nitrogen at a temperature of 85 °C. With this temperature maintained, a mixture of 60 parts of triisopropylsilyl acrylate, 40 parts of methyl methacrylate and 0.3 part of 2,2'-azobis(isobutyronitrile) was charged into the reaction vessel over 2 hours. Thereafter, stirring was carried out for 4 hours at this temperature, and then 0.4 part of 2,2'-azobis(isobutyronitrile) was added, and stirring was further carried out for 4 hours at this temperature, to obtain a colourless and transparent reaction mixture containing a silyl ester copolymer.

### Procedure for preparation of comparative copolymer solution CS2

Copolymer solution CS2 was prepared using the procedure described for preparation of copolymer solution CS1. The ingredients were used in the proportions given in Table 1.

**Table 1. Ingredients in parts by weights and properties of copolymer solutions.**

| | | Polymer ex. | | | | | | | | | Comparative ex. | | | |
|---|---|---|---|---|---|---|---|---|---|---|---|---|---|---|
| | Polymer | S1 | S2 | S3 | S4 | S5 | S6 | S7 | S8 | S9 | CS1 | CS2 | CS3 | CS4 |
| Reactor charge | Xylene | 53.0 | 60.0 | 60.0 | 60.0 | 60.0 | 60.0 | 60.0 | 60.0 | 53.0 | 100.0 | 100.0 | 60.0 | 60.0 |
| Feed charge | Triisopropylsilyl methacrylate | 50.0 | 55.0 | 50.0 | 55.0 | 50.0 | 55.0 | 50.0 | 45.0 | 60.0 | - | - | - | 55.0 |
| | Triisopropylsilyl acrylate | - | - | - | - | - | - | 5.0 | - | - | 60.0 | 50.0 | 60.0 | - |
| | 2-Methoxyethyl methacrylate | 30.0 | - | - | - | - | - | - | - | 25.0 | - | - | - | - |
| | 2-Methoxyethyl acrylate | - | - | - | - | - | - | - | - | - | - | 5.0 | 7.0 | - |
| | 2-(2-Ethoxyethoxy)ethyl acrylate | - | 10.0 | - | 6.0 | - | - | - | 10.0 | - | - | - | - | - |
| | Tetrahydrofurfuryl acrylate | - | - | 20.0 | | 20.0 | 15.0 | 17.0 | - | - | - | - | - | - |
| | n-Butyl acrylate | 10.0 | 5.0 | 5.0 | 15.0 | 10.0 | 10.0 | 8.0 | 10.0 | 5.0 | - | - | - | 20.0 |
| | Methyl methacrylate | 10.0 | 30.0 | 25.0 | 24.0 | 20.0 | 20.0 | 20.0 | 35.0 | 10.0 | 40.0 | 45.0 | 33.0 | 25.0 |
| | 2,2'-Azobis(2-methylbutyronitrile) | 1.00 | 1.20 | 1.20 | 1.20 | 1.00 | 1.00 | 1.00 | 1.20 | 1.00 | - | - | 1.00 | 1.20 |
| | 2,2'-Azobis(isobutyronitrile) | - | - | - | - | - | - | - | - | - | 0.30 | 0.50 | - | - |
| Boost charge | 2,2'-Azobis(2-methylbutyronitrile) | - | 0.20 | 0.20 | 0.20 | 0.20 | 0.20 | 0.20 | 0.20 | - | - | - | 0.20 | 0.20 |
| | 2,2'-Azobis(isobutyronitrile) | - | - | - | - | - | - | - | - | - | 0.40 | 0.40 | - | - |
| | *tert*-Butyl peroxy-2-ethylhexanoate | 0.50 | - | - | - | - | - | - | - | 0.50 | - | - | - | - |
| | Xylene | | 7.5 | 7.5 | 7.5 | 7.5 | 7.5 | 7.5 | 7.5 | - | - | - | 7.5 | 7.5 |
| Thinning | Xylene | 30.0 | 15.5 | 15.5 | 15.5 | 15.3 | 15.3 | 15.3 | 15.5 | 30.0 | - | - | 15.3 | 15.5 |
| Polymerisation temperature (°C) | | 85 | 85 | 85 | 95 | 95 | 95 | 95 | 85 | 85 | 85 | 85 | 85 | 95 |
| Copolymer solution properties | Non-volatile matter (wt%) | 55.4 | 54.6 | 55.6 | 54.4 | 55.6 | 55.1 | 54.8 | 55.4 | 53.5 | 50.4 | 50.6 | 55.2 | 54.6 |
| | Viscosity (cP) | 665 | 624 | 815 | 284 | 372 | 335 | 303 | 885 | 512 | 460 | 477 | 385 | 340 |
| | Mw (x1000) | 37.4 | 32.5 | 38.1 | 23.4 | 25.9 | 24.9 | 23.9 | 35.7 | 37.8 | 46.8 | 35.9 | 29.8 | 24.7 |
| | PDI | 3.14 | 2.93 | 3.32 | 2.61 | 2.74 | 2.71 | 2.69 | 2.89 | 3.05 | 5.14 | 3.94 | 3.56 | 2.58 |
| | Tg (°C) | 30 | 45 | 43 | 32 | 34 | 38 | 38 | 33 | 31 | 59 | 47 | 39 | 37 |

**Table 2. Paint formulations with ingredients in parts by weight.**

| | | **P1** | **P2** | **CP1** | **CP2** | **CP3** | **CP4** |
|---|---|---|---|---|---|---|---|
| Silyl ester copolymer solution | S1 | 23.0 | 23.0 | 23.0 | - | - | - |
| | CS3 | - | - | - | 25.3 | 25.3 | 25.3 |
| Other binders | Rosin solution (60% in xylene) | 5.0 | 5.0 | 5.0 | 5.0 | 5.0 | 5.0 |
| Biocides | Cuprous oxide | 45.0 | 45.0 | 45.0 | 45.0 | 45.0 | 45.0 |
| | Copper pyrithione | 2.0 | 2.0 | 2.0 | 2.0 | 2.0 | 2.0 |
| | Medetomidine | 0.2 | 0.4 | | 0.2 | 0.4 | |
| Pigments and extenders | Iron oxide red | 2.0 | 2.0 | 2.0 | 2.0 | 2.0 | 2.0 |
| | Titanium dioxide | 1.0 | 1.0 | 1.0 | 1.0 | 1.0 | 1.0 |
| | Zinc oxide | 4.0 | 4.0 | 4.0 | 4.0 | 4.0 | 4.0 |
| | Talc | 4.0 | 4.0 | 4.0 | 4.0 | 4.0 | 4.0 |
| Additives | Tetraethoxysilane | 1.0 | 1.0 | 1.0 | 1.0 | 1.0 | 1.0 |
| | Polyamide wax (20% in xylene) | 1.0 | 1.0 | 1.0 | 1.0 | 1.0 | 1.0 |
| | Oxidized polyethylene wax (25% in xylene) | 1.0 | 1.0 | 1.0 | 1.0 | 1.0 | 1.0 |
| Solvent | Xylene | 8.0 | 8.0 | 8.0 | 5.7 | 5.7 | 5.7 |

**Table 3. Cracking resistance of coating films.**

| Formulation | Cracking resistance | |
|---|---|---|
| | 2 mth | 6 mth |
| P1 | 0 | 0 |
| P2 | 0 | 0 |
| CP1 | 0 | 0 |
| CP2 | 4 | n.d. |
| CP3 | 4 | n.d. |
| CP4 | 0 | n.d. |

**Table 4. Ingredients in parts by weights for antifouling coating compositions.**

| | | Paint examples | | | | | | | | | Comparative examples | | | |
|---|---|---|---|---|---|---|---|---|---|---|---|---|---|---|
| | | PA1 | PA2 | PA3 | PA4 | PA5 | PA6 | PA7 | PA8 | PA9 | CPA1 | CPA2 | CPA3 | CPA4 |
| Silyl ester copolymer solution | S1 | 24.5 | - | - | - | - | - | - | - | - | - | - | - | - |
| | S2 | - | 24.5 | - | - | - | - | - | - | - | - | - | - | - |
| | S3 | - | - | 24.5 | - | - | - | - | - | - | - | - | - | - |
| | S4 | - | - | - | - | - | - | 24.5 | - | - | - | - | - | - |
| | S5 | - | - | - | - | - | - | - | 24.5 | - | - | - | - | - |
| | S6 | - | - | - | 24.5 | - | - | - | - | - | - | - | - | - |
| | S7 | - | - | - | - | 24.5 | - | - | - | | - | - | - | - |
| | S8 | - | - | - | - | - | - | - | - | 24.5 | - | - | - | - |
| | S9 | - | - | - | - | - | 24.5 | - | - | - | - | - | - | - |
| | CS1 | - | - | - | - | - | - | - | - | - | 27.0 | - | - | - |
| | CS2 | - | - | - | - | - | - | - | - | - | - | 24.5 | - | - |
| | CS3 | - | - | - | - | - | - | - | - | - | - | - | 24.5 | - |
| | CS4 | - | - | - | - | - | - | - | - | - | - | - | - | 24.5 |
| Other binders | Gum rosin solution (60 wt% in xylene) | 12.5 | 12.5 | 12.5 | 12.5 | 12.5 | 12.5 | 12.5 | 12.5 | 12.5 | 12.5 | 12.5 | 12.5 | 12.5 |
| | Poly(n-butylacrylate) | 3.0 | 3.0 | 3.0 | 3.0 | 3.0 | 3.0 | 3.0 | 3.0 | 3.0 | 3.0 | 3.0 | 3.0 | 3.0 |
| Biocides | Zinc pyrithione | 2.5 | 2.5 | 2.5 | 2.5 | 2.5 | 2.5 | 2.5 | 2.5 | 2.5 | 2.5 | 2.5 | 2.5 | 2.5 |
| | Tralopyril | 3.0 | 3.0 | 3.0 | 3.0 | 3.0 | 3.0 | 3.0 | 3.0 | 3.0 | 3.0 | 3.0 | 3.0 | 3.0 |
| | Medetomidine solution (20 wt% in 1-methoxy-2-propanol) | 1.0 | 1.0 | 1.0 | 1.0 | 1.0 | 1.0 | 1.0 | 1.0 | 1.0 | 1.0 | 1.0 | 1.0 | 1.0 |
| Pigments and extenders | Iron oxide red | 5.0 | 5.0 | 5.0 | 5.0 | 5.0 | 5.0 | 5.0 | 5.0 | 5.0 | 5.0 | 5.0 | 5.0 | 5.0 |
| | Talc | 5.0 | 5.0 | 5.0 | 5.0 | 5.0 | 5.0 | 5.0 | 5.0 | 5.0 | 5.0 | 5.0 | 5.0 | 5.0 |
| | Zinc phosphate | 17.0 | 17.0 | 17.0 | 17.0 | 17.0 | 17.0 | 17.0 | 17.0 | 17.0 | 17.0 | 17.0 | 17.0 | 17.0 |
| | Zinc oxide | 15.0 | 15.0 | 15.0 | 15.0 | 15.0 | 15.0 | 15.0 | 15.0 | 15.0 | 15.0 | 15.0 | 15.0 | 15.0 |
| Additives | Polyamide wax (20 wt% in xylene) | 2.0 | 2.0 | 2.0 | 2.0 | 2.0 | 2.0 | 2.0 | 2.0 | 2.0 | 2.0 | 2.0 | 2.0 | 2.0 |
| | Tetraethoxysilane | 1.0 | 1.0 | 1.0 | 1.0 | 1.0 | 1.0 | 1.0 | 1.0 | 1.0 | 1.0 | 1.0 | 1.0 | 1.0 |
| Solvents | Xylene | 7.5 | 7.5 | 7.5 | 7.5 | 7.5 | 7.5 | 7.5 | 7.5 | 7.5 | 5.0 | 7.5 | 7.5 | 7.5 |
| | 1-Methoxy-2-propanol | 1.0 | 1.0 | 1.0 | 1.0 | 1.0 | 1.0 | 1.0 | 1.0 | 1.0 | 1.0 | 1.0 | 1.0 | 1.0 |
| Total | | 100.0 | 100.0 | 100.0 | 100.0 | 100.0 | 100.0 | 100.0 | 100.0 | 100.0 | 100.0 | 100.0 | 100.0 | 100.0 |

**Table 5: Results for antifouling coating properties**

| | | Paint examples | | | | | | | | | Comparative examples | | | |
|---|---|---|---|---|---|---|---|---|---|---|---|---|---|---|
| | | PA1 | PA2 | PA3 | PA4 | PA5 | PA6 | PA7 | PA8 | PA9 | CPA1 | CPA2 | CPA3 | CPA4 |
| Storage stability (cP) | Start | 381 | 378 | 423 | 287 | 279 | 331 | 258 | 309 | 412 | 450 | 342 | 321 | 308 |
| | 1 week | 432 | 429 | 485 | 317 | 365 | 456 | 298 | 389 | 504 | >1000 | 800 | 736 | 350 |
| | 2 weeks | 551 | 561 | 568 | 425 | 442 | 543 | 419 | 379 | 509 | gel | gel | gel | 443 |
| Film reduction (µm) | 7 months | 50 | 26 | 41 | 21 | 33 | 40 | 12 | 30 | 19 | PT after 5 mths | PT after 4 mths | PT after 3 mths | 7 |
| Barnacle resistance | 7 months | 0 | 0 | 0 | 0 | 0 | 0 | 0 | 0 | 0 | 0 | 0 | 0 | 0 |

| | | | | | | | | | | | | | | |
|---|---|---|---|---|---|---|---|---|---|---|---|---|---|---|
| PT=polished through | | | | | | | | | | | | | | |

The results in Table 5 show that antifouling coatings made with copolymers comprising triisopropylsilyl methacrylate (PA1-PA9) exhibit better storage stability and more controlled polishing (film consumption) than comparative antifouling coatings made with copolymers comprising triisopropylsilyl acrylate (CPA1-CPA3). The absence of a hydrophilic comonomer in the copolymers comprising triisopropylsilyl methacrylate as in antifouling coating composition (CPA4) gives an extremely slow polishing (film consumption). Both the paint examples and the comparative examples exhibits good barnacle resistance due to the presence of medetomidine.

**Table 6. Ingredients in parts by weights for antifouling coating compositions.**

| | | Paint examples | | | | | | | | | | | | |
|---|---|---|---|---|---|---|---|---|---|---|---|---|---|---|
| | | PB1 | PB2 | PB3 | PB4 | PB5 | PB6 | PB7 | PB8 | PB9 | PB10 | PB11 | PB12 | PB13 |
| Silyl ester copolymer solution | S1 | 24.0 | - | - | - | - | - | - | - | - | - | - | - | - |
| | S2 | - | 24.0 | - | - | - | - | - | - | - | - | - | - | - |
| | S3 | - | - | 24.0 | - | - | - | - | - | - | 24.0 | 24.0 | 24.0 | 21.0 |
| | S4 | - | - | - | - | - | - | 24.0 | - | - | - | - | - | - |
| | S5 | - | - | - | 24.0 | - | - | - | - | - | - | - | - | - |
| | S6 | - | - | - | - | - | - | - | 24.0 | - | - | - | - | - |
| | S7 | - | - | - | - | 24.0 | - | - | - | - | - | - | - | - |
| | S8 | - | - | - | - | - | - | - | - | 24.0 | - | - | - | - |
| | S9 | - | - | - | - | - | 24.0 | - | - | - | - | - | - | - |
| Other binders | Gum rosin solution (60 wt% in xylene) | 7.0 | 7.0 | 7.0 | 7.0 | 7.0 | 7.0 | 7.0 | 7.0 | 7.0 | 7.0 | 7.0 | 7.0 | 10.0 |
| | Poly(n-butylacrylate) | | | | | | | | | | | | | |
| Biocides | Cuprous oxide | 45.0 | 45.0 | 45.0 | 45.0 | 45.0 | 45.0 | 45.0 | 45.0 | 45.0 | 45.0 | 45.0 | 45.0 | 45.0 |
| | Copper pyrithione | 3.0 | 3.0 | 3.0 | 3.0 | 3.0 | 3.0 | 3.0 | 3.0 | 3.0 | 3.0 | 3.0 | 3.0 | 3.0 |
| | Medetomidine solution (20 wt% in 1-methoxy-2-propanol) | 1.0 | 1.0 | 1.0 | 1.0 | 1.0 | 1.0 | 1.0 | 1.0 | 1.0 | 0.25 | 0.5 | 2.0 | 1.0 |
| Pigments and extenders | Iron oxide red | 2.0 | 2.0 | 2.0 | 2.0 | 2.0 | 2.0 | 2.0 | 2.0 | 2.0 | 2.0 | 2.0 | 2.0 | 2.0 |
| | Titanium dioxide | 1.0 | 1.0 | 1.0 | 1.0 | 1.0 | 1.0 | 1.0 | 1.0 | 1.0 | 1.0 | 1.0 | 1.0 | 1.0 |
| | Talc | 4.5 | 4.5 | 4.5 | 4.5 | 4.5 | 4.5 | 4.5 | 4.5 | 4.5 | 4.5 | 4.5 | 4.5 | 4.5 |
| | Zinc oxide | 4.5 | 4.5 | 4.5 | 4.5 | 4.5 | 4.5 | 4.5 | 4.5 | 4.5 | 4.5 | 4.5 | 4.5 | 4.5 |
| Additives | Polyamide wax (20 wt% in xylene) | 1.0 | 1.0 | 1.0 | 1.0 | 1.0 | 1.0 | 1.0 | 1.0 | 1.0 | 1.0 | 1.0 | 1.0 | 1.0 |
| | Poly(ethylene oxide) wax (25 wt% in xylene) | 0.5 | 0.5 | 0.5 | 0.5 | 0.5 | 0.5 | 0.5 | 0.5 | 0.5 | 0.5 | 0.5 | 0.5 | 0.5 |
| | Tetraethoxysilane | 0.5 | 0.5 | 0.5 | 0.5 | 0.5 | 0.5 | 0.5 | 0.5 | 0.5 | 0.5 | 0.5 | 0.5 | 0.5 |
| Solvents | Xylene | 6.0 | 6.0 | 6.0 | 6.0 | 6.0 | 6.0 | 6.0 | 6.0 | 6.0 | 6.75 | 6.5 | 5.0 | 6.0 |
| Total | | 100.0 | 100.0 | 100.0 | 100.0 | 100.0 | 100.0 | 100.0 | 100.0 | 100.0 | 100.0 | 100.0 | 100.0 | 100.0 |

**Table 7. Ingredients in parts by weights for comparative antifouling coating compositions.**

| | | Comparative examples | | | |
|---|---|---|---|---|---|
| | | CPB1 | CPB2 | CPB3 | CPB4 |
| | S3 | | - | - | 31.0 |
| | CS1 | 26.5 | - | - | - |
| | CS2 | - | 24.0 | - | - |
| | CS3 | - | - | 24.0 | - |
| | CS4 | - | - | - | - |
| Other binders | Gum rosin solution (60 wt% in xylene) | 7.0 | 7.0 | 7.0 | |
| | Poly(n-butylacrylate) | - | - | - | - |
| Biocides | Cuprous oxide | 45.0 | 45.0 | 45.0 | 45.0 |
| | Copper pyrithione | 3.0 | 3.0 | 3.0 | 3.0 |
| | Medetomidine solution (20 wt% in 1-methoxy-2-propanol) | 1.0 | 1.0 | 1.0 | 1.0 |
| Pigments and extenders | Iron oxide red | 2.0 | 2.0 | 2.0 | 2.0 |
| | Titanium dioxide | 1.0 | 1.0 | 1.0 | 1.0 |
| | Talc | 4.5 | 4.5 | 4.5 | 4.5 |
| | Zinc oxide | 4.5 | 4.5 | 4.5 | 4.5 |
| Additives | Polyamide wax (20 wt% in xylene) | 1.0 | 1.0 | 1.0 | 1.0 |
| | S3 | - | - | - | 31.0 |
| | CS1 | 26.5 | - | - | - |
| | CS2 | - | 24.0 | - | - |
| | CS3 | - | - | 24.0 | - |
| | CS4 | - | - | - | - |
| | Poly(ethylene oxide) wax (25 wt% in xylene) | 0.5 | 0.5 | 0.5 | 0.5 |
| | Tetraethoxysilane | 0.5 | 0.5 | 0.5 | 0.5 |
| Solvents | Xylene | 3.5 | 6.0 | 6.0 | 6.0 |
| Total | | 100.0 | 100.0 | 100.0 | 100.0 |

**Table 8: Results for antifouling coating properties**

| | | Paint examples | | | | | | | | | | | | |
|---|---|---|---|---|---|---|---|---|---|---|---|---|---|---|
| | | PB1 | PB2 | PB3 | PB4 | PB5 | PB6 | PB7 | PB8 | PB9 | PB10 | PB11 | PB12 | PB13 |
| Paint viscosity (cP) | | 399 | 367 | 513 | 368 | 275 | 387 | 273 | 327 | 482 | 571 | 467 | 561 | 470 |
| VOC calc. (g/L) | | 394 | 393 | 393 | 393 | 397 | 399 | 398 | 395 | 394 | 395 | 394 | 390 | 391 |
| Cracking resistance | 7 months | 0 | 0 | 0 | 0 | 0 | 0 | 0 | 0 | 0 | 0 | 1 | 0 | 0 |
| Barnacle resistance | 7 months | 0 | 0 | 0 | 0 | 0 | 0 | 0 | 0 | 0 | 1 | 0 | 0 | 0 |

**Table 9: Results for antifouling coating properties**

| | | Comparative examples | | | |
|---|---|---|---|---|---|
| | | CPB1 | CPB2 | CPB3 | CPB4 |
| Paint viscosity (cP) | | 596 | 390 | 363 | 596 |
| VOC calc. (g/L) | | 393 | 415 | 395 | 398 |
| Cracking resistance | 7 months | 4 | 4 | 4 | 4 |
| Barnacle resistance | 7 months | 0 | 0 | 0 | 0 |

The results in Table 8 and Table 9 show that antifouling coatings made with copolymers comprising triisopropylsilyl methacrylate (PB1-PB13) exhibit better cracking resistance than comparative antifouling coatings made with copolymers comprising triisopropylsilyl acrylate (CPB1-CPB3). The absence of a carboxylic acid such as rosin in the copolymers comprising triisopropylsilyl methacrylate as in antifouling coating composition (CPB4) will also give reduced cracking resistance. Both the paint examples and the comparative examples exhibits good barnacle resistance due to the presence of medetomidine.

## Claims

1. An antifouling coating composition comprising (i) a silyl ester copolymer comprising as comonomers:
(a) triisopropylsilyl methacrylate;
(b) a compound of Formula (I) 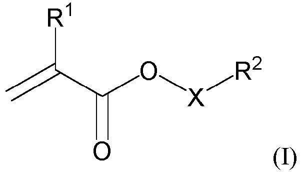 wherein R¹ is hydrogen or methyl, R² is a cyclic ether (such as oxolane, oxane, dioxolane, dioxane optionally alkyl substituted) and X is a C1-C4 alkylene; and/or a compound of Formula (II) 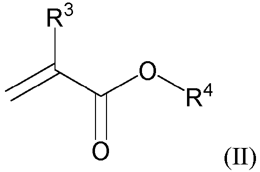 wherein R³ is hydrogen or methyl, and R⁴ is a C3-C18 substituent with at least one oxygen or nitrogen atom; and optionally
(c) one or more comonomers of Formula (III) 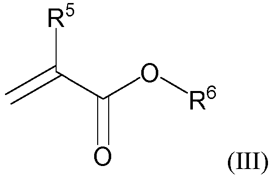 wherein R⁵ is hydrogen or methyl, and R⁶ is a C1-C8 hydrocarbyl;
(ii) medetomidine; and
(iii) rosin or a derivative thereof;
wherein the antifouling coating composition has a calculated VOC content (ASTM D5201-01) below 400 g/L.

2. An antifouling coating composition as claimed in any preceding claim wherein the amount of component(s) (b) in the silyl ester copolymer is in the range of 2 to 50 wt%, preferably in the range of 2 to 40 wt%, more preferably in the range of 5 to 35 wt%.

3. An antifouling coating composition as claimed in any preceding claim wherein the amount of (a) in the silyl ester copolymer is in the range of 5 to 80 wt% of the copolymer, preferably 25 to 75 wt%, especially 30 to 70 wt%.

4. An antifouling coating composition as claimed in any preceding claim wherein in Formula (II), R⁴ is a group of formula -(CH₂CH₂O)ₘ-R⁷ where R⁷ is a C1-C10 alkyl or a C6-C10 aryl substituent and m is an integer in the range of 1 to 6, preferably 1 to 3.

5. An antifouling coating composition as claimed in claim 4 wherein R⁴ is a group of formula -(CH₂CH₂O)ₘ-R⁷ where R⁷ is a C1-C10 alkyl substituent, preferably methyl or ethyl, and m is an integer in the range of 1 to 3, preferably 1 or 2.

6. An antifouling coating composition as claimed in any preceding claim wherein component (b) comprises one or more of 2-methoxyethyl acrylate, 2-methoxyethyl methacrylate, 2-ethoxyethyl methacrylate, 2-(2-ethoxyethoxy)ethyl acrylate, 2-(2-ethoxyethoxy)ethyl methacrylate, tetrahydrofurfuryl acrylate, and tetrahydrofurfuryl methacrylate.

7. An antifouling coating composition as claimed in any preceding claim comprising one or more non-hydrophilic comonomers of Formula (III): 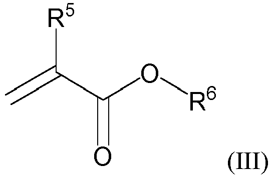 wherein R⁵ is hydrogen or methyl, and R⁶ is a C1-C8 hydrocarbyl substituent.

8. An antifouling coating composition as claimed in any preceding claim comprising one or more of methyl methacrylate and n-butyl acrylate.

9. An antifouling coating composition as claimed in any preceding claim comprising methyl methacrylate as a comonomer in an amount of 2 to 60 wt%, preferably 5 to 50 wt%.

10. An antifouling coating composition as claimed in any preceding claim comprising n-butyl acrylate as a comonomer in an amount of 1 to 30 wt%, preferably 2 to 25 wt%.

11. An antifouling coating composition as claimed in any preceding claim wherein the triisopropylsilyl methacrylate (a), comonomer(s) (b) and comonomer(s) (c) taken together form >95 wt% of the comonomers in the silyl ester copolymer.

12. An antifouling coating composition as claimed in any preceding claim futher comprising tralopyril and/or zinc pyrithione.

13. An antifouling coating composition as claimed in any preceding claim comprising rosin.

14. An antifouling coating composition as claimed in any preceding claim which further comprises cuprous oxide and/or copper pyrithione or is free of inorganic copper compounds.

15. An antifouling coating composition as claimed in any preceding claim wherein the binder used in the antifouling coating composition comprises (i) the silyl ester copolymer, (ii) the rosin and an additional binder, such as a (meth)acrylic polymer or (meth)acrylic copolymer.

16. A process for protecting an object from fouling, said process comprising coating at least a part of said object which is subject to fouling with an antifouling coating composition as claimed in any of claims 1 to 15.

17. An object coated with the antifouling coating composition as claimed in any of claims 1 to 15.

## Patentansprüche

1. Antifouling-Beschichtungszusammensetzung, umfassend (i) ein Silylestercopolymer, das als Comonomere umfasst:
a) Triisopropylsilylmethacrylat;
(b) eine Verbindung der Formel (I) 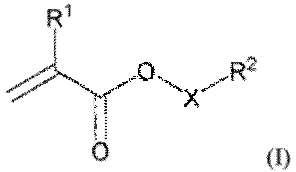 wobei R¹ Wasserstoff oder Methyl ist, R² ein zyklischer Äther (wie Oxolan, Oxan, Dioxolan, Dioxan, optional alkylsubstituiert) ist und X ein C1-C4-Alkylen ist; und/oder eine Verbindung der Formel (II) 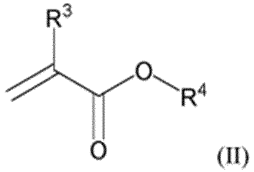 wobei R³ Wasserstoff oder Methyl ist und R⁴ ein C3-C18-Substituent mit mindestens einem Sauerstoff- oder Stickstoffatom ist; und optional
(c) ein oder mehrere Comonomere der Formel (III) 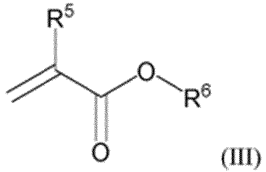 wobei R⁵ Wasserstoff oder Methyl ist, und R⁶ ein C1-C8-Hydrocarbyl ist;
ii) Medetomidin; und
iii) Kolophonium oder ein Derivat davon;
wobei die Antifouling-Beschichtungszusammensetzung einen berechneten VOC-Gehalt (ASTM D5201-01) unter 400 g/L aufweist.

2. Antifouling-Beschichtungszusammensetzung nach einem vorstehenden Anspruch, wobei die Menge der Komponente(n) (b) in dem Silylestercopolymer im Bereich von 2 bis 50 Gew.-%, vorzugsweise im Bereich von 2 bis 40 Gew.-%, bevorzugter im Bereich von 5 bis 35 Gew.-% liegt.

3. Antifouling-Beschichtungszusammensetzung nach einem vorstehenden Anspruch, wobei die Menge an (a) in dem Silylestercopolymer im Bereich von 5 bis 80 Gew.-% des Copolymers, vorzugsweise 25 bis 75 Gew.-%, insbesondere 30 bis 70 Gew.-% liegt.

4. Antifouling-Beschichtungszusammensetzung nach einem vorstehenden Anspruch, wobei in Formel (II) R⁴ eine Gruppe der Formel -(CH₂CH₂O)ₘ-R⁷ ist, wobei R⁷ ein C1-C10-Alkyl oder ein C6-C10-Arylsubstituent ist und m eine ganze Zahl im Bereich von 1 bis 6, vorzugsweise 1 bis 3 ist.

5. Antifouling-Beschichtungszusammensetzung nach Anspruch 4, wobei R⁴ eine Gruppe der Formel -(CH₂CH₂O)ₘ-R⁷ ist, wobei R⁷ ein C1-C10-Alkylsubstituent, vorzugsweise Methyl oder Ethyl, ist und m eine ganze Zahl im Bereich von 1 bis 3, vorzugsweise 1 oder 2 ist.

6. Antifouling-Beschichtungszusammensetzung nach einem vorstehenden Anspruch, wobei Komponente (b) eines oder mehrere von 2-Methoxyethylacrylat, 2-Methoxyethylmethacrylat, 2-Ethoxyethylmethacrylat, 2-(2-Ethoxyethoxy)ethylacrylat, 2-(2-Ethoxyethoxy)ethylmethacrylat, Tetrahydrofurfurylacrylat und Tetrahydrofurfurylmethacrylat umfasst.

7. Antifouling-Beschichtungszusammensetzung nach einem vorstehenden Anspruch, die ein oder mehrere nicht-hydrophile Comonomere der Formel (III) umfasst: 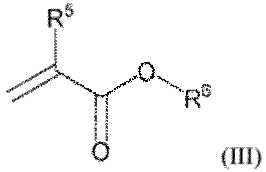 wobei R⁵ Wasserstoff oder Methyl ist und R⁶ ein C1-C8-Hydrocarbylsubstituent ist.

8. Antifouling-Beschichtungszusammensetzung nach einem vorstehenden Anspruch, die eines oder mehr von Methylmethacrylat und n-Butylacrylat umfasst.

9. Antifouling-Beschichtungszusammensetzung nach einem vorstehenden Anspruch, die Methylmethacrylat als ein Comonomer in einer Menge von 2 bis 60 Gew.-%, vorzugsweise 5 bis 50 Gew.-% umfasst.

10. Antifouling-Beschichtungszusammensetzung nach einem vorstehenden Anspruch, die n-Butylacrylat als ein Comonomer in einer Menge von 1 bis 30 Gew.-%, vorzugsweise 2 bis 25 Gew.-% umfasst.

11. Antifouling-Beschichtungszusammensetzung nach einem vorstehenden Anspruch, wobei das Triisopropylsilylmethacrylat (a), Comonomer(e) (b) und Comonomer(e) (c) zusammengenommen >95 Gew.-% der Comonomere in dem Silylestercopolymer bilden.

12. Antifouling-Beschichtungszusammensetzung nach einem vorstehenden Anspruch, die weiter Tralopyril und/oder Zinkpyrithion umfasst.

13. Antifouling-Beschichtungszusammensetzung nach einem vorstehenden Anspruch, die Kolophonium umfasst.

14. Antifouling-Beschichtungszusammensetzung nach einem vorstehenden Anspruch, die weiter Kupfer(I)-oxid und/oder Kupferpyrithion umfasst oder frei von anorganischen Kupferverbindungen ist.

15. Antifouling-Beschichtungszusammensetzung nach einem vorstehenden Anspruch, wobei das in der Antifouling-Beschichtungszusammensetzung verwendete Bindemittel (i) das Silylestercopolymer, (ii) das Kolophonium und ein zusätzliches Bindemittel, wie beispielsweise ein (Meth)acrylpolymer oder (Meth)acrylcopolymer, umfasst.

16. Prozess zum Schützen eines Objekts vor Verschmutzung, wobei das Verfahren Beschichten mindestens eines Teils des Objekts, der Verschmutzung ausgesetzt ist, mit einer Antifouling-Beschichtungszusammensetzung nach einem der Ansprüche 1 bis 15 umfasst.

17. Objekt, das mit der Antifouling-Beschichtungszusammensetzung nach einem der Ansprüche 1 bis 15 beschichtet ist.

## Revendications

1. Composition de revêtement antisalissure comprenant (i) un copolymère d'ester de silyle comprenant comme comonomères :
(a) un méthacrylate de triisopropyle silyle ;
(b) un composé de Formule (I) 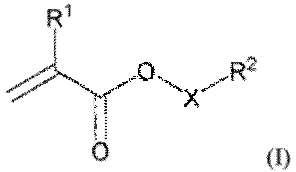 dans laquelle R¹ est un hydrogène ou un méthyle, R² est un éther cyclique (tel que l'oxolane, l'oxane, le dioxolane, le dioxane facultativement substitué par un alkyle) et X est un alkylène en C1-C4 ; et/ou un composé de Formule (II) 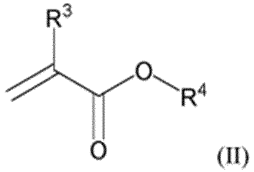 dans laquelle R³ est un hydrogène ou un méthyle et R⁴ est un substituant en C3-C18 avec au moins un atome d'oxygène ou d'azote ; et facultativement
(c) un ou plusieurs comonomères de Formule (III) 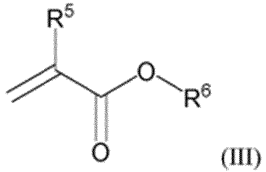 dans laquelle R⁵ est un hydrogène ou un méthyle et R⁶ est un hydrocarbyle en C1-C8;
(ii) une médétomidine ; et
(iii) une colophane ou un dérivé de celle-ci ;
dans laquelle la composition de revêtement antisalissure présente une teneur en COV calculée (ASTM D5201-01) inférieure à 400 g/l.

2. Composition de revêtement antisalissure selon une quelconque revendication précédente, dans laquelle la quantité du ou des composants (b) dans le copolymère d'ester de silyle est dans la plage de 2 à 50 % en poids, de préférence dans la plage de 2 à 40 % en poids, plus préférentiellement dans la plage de 5 à 35 % en poids.

3. Composition de revêtement antisalissure selon une quelconque revendication précédente, dans laquelle la quantité de (a) dans le copolymère d'ester de silyle est dans la plage de 5 à 80 % en poids du copolymère, de préférence de 25 à 75 % en poids, en particulier de 30 à 70 % en poids.

4. Composition de revêtement antisalissure selon une quelconque revendication précédente, dans laquelle, dans la Formule (II), R⁴ est un groupe de formule -(CH₂CH₂O)ₘ-R⁷ dans laquelle R⁷ est un substituant alkyle en C1-C10 ou aryle en C6-C10 et m est un nombre entier dans la plage de 1 à 6, de préférence de 1 à 3.

5. Composition de revêtement antisalissure selon la revendication 4, dans laquelle R⁴ est un groupe de formule -(CH₂CH₂O)ₘ-R⁷ dans laquelle R⁷ est un substituant alkyle en C1-C10, de préférence méthyle ou éthyle et m est un nombre entier dans la plage de 1 à 3, de préférence 1 ou 2.

6. Composition de revêtement antisalissure selon une quelconque revendication précédente, dans laquelle le composant (b) comprend un ou plusieurs de l'acrylate de 2-méthoxyéthyle, du méthacrylate de 2-méthoxyéthyle, du méthacrylate de 2-éthoxyéthyle, de l'acrylate de 2-(2-éthoxyéthoxy)éthyle, du méthacrylate de 2-(2-éthoxyéthoxy)éthyle, de l'acrylate de tétrahydrofurfuryle et du méthacrylate de tétrahydrofurfuryle.

7. Composition de revêtement antisalissure selon une quelconque revendication précédente, comprenant un ou plusieurs comonomères non hydrophiles de Formule (III) : 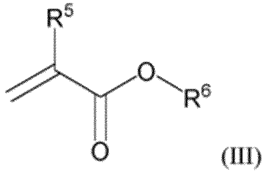 dans laquelle R⁵ est un hydrogène ou un méthyle et R⁶ est un substituant hydrocarbyle en C1-C8.

8. Composition de revêtement antisalissure selon une quelconque revendication précédente, comprenant un ou plusieurs du méthacrylate de méthyle et de l'acrylate de n-butyle.

9. Composition de revêtement antisalissure selon une quelconque revendication précédente, comprenant du méthacrylate de méthyle comme comonomère en une quantité de 2 à 60 % en poids, de préférence de 5 à 50 % en poids.

10. Composition de revêtement antisalissure selon une quelconque revendication précédente, comprenant de l'acrylate de n-butyle comme comonomère en une quantité de 1 à 30 % en poids, de préférence de 2 à 25 % en poids.

11. Composition de revêtement antisalissure selon une quelconque revendication précédente, dans laquelle le méthacrylate de triisopropylsilyle (a), le ou les comonomères (b) et le ou les comonomères (c) pris ensemble forment >95 % en poids des comonomères dans le copolymère d'ester de silyle.

12. Composition de revêtement antisalissure selon une quelconque revendication précédente, comprenant en outre du tralopyril et/ou de la pyrithione de zinc.

13. Composition de revêtement antisalissure selon une quelconque revendication précédente, comprenant de la colophane.

14. Composition de revêtement antisalissure selon une quelconque revendication précédente, qui comprend en outre de l'oxyde cuivreux et/ou de la pyrithione de cuivre ou est exempte de composés de cuivre inorganiques.

15. Composition de revêtement antisalissure selon une quelconque revendication précédente, dans laquelle le liant utilisé dans la composition de revêtement antisalissure comprend (i) le copolymère d'ester de silyle, (ii) la colophane et un liant supplémentaire, tel qu'un polymère (méth)acrylique ou un copolymère (méth)acrylique.

16. Processus de protection d'un objet contre l'encrassement, ledit processus comprenant le revêtement d'au moins une partie dudit objet qui est sujette à l'encrassement avec une composition de revêtement antisalissure selon l'une quelconque des revendications 1 à 15.

17. Objet revêtu de la composition de revêtement antisalissure selon l'une quelconque des revendications 1 à 15.
